# FASCICULE DE BREVET EUROPEEN

(11) **EP 1 093 902 B1**
(45) Date de publication et mention de la délivrance du brevet: **11.02.2004**
(21) Numéro de dépôt: 00402833.8
(22) Date de dépôt: 13.10.2000
(51) Int. Cl.: B29C 43/24, B29C 47/02, B29D 31/00, B60J 10/00, B29C 47/32, B29C 69/02, B29C 47/06

(54) **Procédé de fabrication d'une armature cintrable, armature cintrable telle qu'obtenue par le procédé, et profilé comportant une telle armature**
Verfahren zur Herstellung einer biegbaren Einlage, durch das Verfahren herstellbare Einlage, und Profil mit einer solchen Einlage
Method of manufacturing a bendable core, core as obtained by the method, and profile comprising such a core

(30) Priorité: 22.10.1999 FR 9913201
(43) Date de publication de la demande: 25.04.2001
(73) Titulaire: HUTCHINSON, 75008 Paris (FR)
(72) Inventeur: Frappier, Alain, 45200 Montargis (FR)
(74) Mandataire: Jacquard, Philippe Jean-Luc

(56) Documents cités:
- DE-A- 3 835 211
- DE-U- 9 014 184
- US-A- 3 825 459
- US-A- 4 676 856

## Description

La présente invention a pour objet un procédé de fabrication d'une armature cintrable présentant des régions ajourées, destinée à un profilé, notamment pour constituer des joints d'étanchéité d'automobile.

Le type de joint avec armature actuellement fabriqué est par exemple composé :
a) d'une armature rigide en métal par exemple en forme de U (en acier ou aluminium découpé, ou cisaillé-étiré, ou bien en fil d'acier, avec textile) ;
b) d'un recouvrement en caoutchouc ou en thermoplastique souple ; si nécessaire, l'armature est traitée pour la rendre adhérente à son recouvrement ;
c) de lèvres d'accrochage à l'intérieur du U ;
d) d'une partie souple assurant l'étanchéité, en caoutchouc souple ou cellulaire.

Les inconvénients majeurs des procédés actuellement utilisés sont les suivants :
- Le métal des profilés extrudés doit être préformé ou post-formé.
- Le métal s'oxyde dans les extrémités du profilé. Pour l'éviter, une protection est nécessaire. Dans ce cas, on choisit d'utiliser un métal inox ou de déposer du vernis sur les parties exposées à l'oxydation. Cela augmente sensiblement le prix du produit fini.
- Le recyclage du produit fini est rendu très difficile par sa composition multi-matériaux de nature différente (métal, caoutchouc, thermoplastique).
- Un coût important du métal manufacturé, ce coût étant encore plus élevé si le métal doit être préparé pour le rendre adhérent au recouvrement en caoutchouc ou thermoplastique TP.
- Une perte de matière due à la nécessité de réaliser des découpes.
- Le poids de l'armature métallique est élevé, les densités sont de 2,7 pour l'aluminium et de 7,8 pour l'acier.
- La préparation des extrémités est nécessaire pour pouvoir les souder ou les surmouler (dégrafage, ébarbage).

Le Modèle d'Utilité allemand DE-U-9014184 (HUTCHINSON Gummiwarenfabrik) suggère d'utiliser pour l'armature notamment un matériau plastique dans lequel des découpes sont réalisées mécaniquement avec perte de matière.

La Demande de Brevet DE 3 825 211 (Gummi-Henniges) propose une armature cisaillée-étirée, selon une technique qui ne convient pas à tous les types d'armatures.

Au moins certains des inconvénients précités sont évités grâce au procédé selon l'invention qui permet de réaliser sans perte de matière les armatures les plus diverses en matière thermoplastique (dont la densité est comprise entre 0,9 et 1,4 selon le matériau choisi), tout en diminuant certains défauts d'aspect de la région dorsale du profilé après recouvrement de l'armature.

L'invention concerne ainsi un procédé de fabrication d'une armature cintrable tel que défini dans la revendication 1.

Lors du calandrage, la matière plastique est dans un état fluide ou semi-fluide, et présente une viscosité qui lui permet de fluer pour réaliser les pleins et les ajours du ou des motifs désirés. De ce fait, l'armature est obtenue sans avoir à réaliser de découpe impliquant un enlèvement de matière, et la présence de voiles tend à éviter le phénomène de retrait observé habituellement après l'extrusion ultérieure du recouvrement de l'armature.

Le procédé peut comporter un refroidissement du cordon ou de la préforme calandrée.

Ce refroidissement peut s'accompagner d'une opération de calibrage.

L'armature cintrable peut présenter en section la forme notamment d'un U, d'un V, d'un S, d'un L ou d'un W.

Selon une première variante, le calandrage est réalisé entre au moins deux galets dont l'un au moins présente une empreinte en creux conformément audit motif, et qui sont entraînés en rotation simultanée. Au moins un des galets peut être refroidi intérieurement.

Selon une variante préférée, le calandrage est réalisé à l'aide d'une chenille de tirage présentant un nombre N de paires de formes présentant des empreintes conformément audit motif.

Avantageusement, les galets de calandrage ou la chenille de tirage présentent une longueur développée égale ou multiple de la longueur L d'un profilé à réaliser. Ceci permet en particulier de réaliser une armature dont le motif présente des variations, par exemple d'épaisseur ou bien de la position de la fibre neutre, en fonction de l'abscisse x prise dans le sens de la longueur de l'armature, x variant entre 0 et L, pour faire varier la section et donc au moins une propriété de l'armature, er fonction de ladite abscisse.

L'armature peut présenter des branches d'extrémité comportant des bords latéraux inclinés de manière à former des dépouilles.

Le procédé peut être caractérisé en ce que, pour la réalisation d'un profilé d'étanchéité armé, il comporte :
d) une extrusion d'une couche de recouvrement souple en élastomère ou en matière thermoplastique pour recouvrir l'armature.

Cette extrusion d'une couche de recouvrement peut s'effectuer immédiatement après calandrage et refroidissement, de telle sorte que le profilé d'étanchéité est obtenu par un procédé continu. En variante, l'armature peut être, après fabrication, stockée, par exemple sur un touret, après quoi l'opération d'extrusion de la couche de recouvrement peut être effectuée sur une installation distincte.

Le procédé peut être caractérisé en ce que le matériau de l'armature rigide et le matériau de la couche de recouvrement souple sont par exemple : (PVC rigide et PVC souple) ; (polypropylène PP et PP-EPDM ou Styrène-Ethylène Butadiène-Styrène SEBS) ; (ABS et SEBS) ; (PVC-ABS et PVC souple); (polymétracrylate PMMA et SEBS).

Le procédé peut mettre en oeuvre une co-extrusion d'une couche intermédiaire et de la couche de matériau de recouvrement, la couche intermédiaire étant en un matériau apte à adhérer au matériau de l'armature et au matériau de la couche de recouvrement souple entre lesquelles elle est interposée.

La couche intermédiaire peut être par exemple des copolymères Ethylène-Acétate de vinyle EVA, ou bien des copolymères Ethylène-Ester acrylique EMA EBA.

Selon un mode de réalisation préféré mettant en oeuvre une couche intermédiaire, l'armature est en polyamide PA, la couche intermédiaire est en EP greffé anhydride maléique. et la couche de recouvrement souple est en EPDM.

L'invention concerne également une armature cintrable en matière thermoplastique, telle qu'obtenue par le procédé de l'invention, présentant un motif comportant des pleins et des ajours au moins dans la région dorsale, caractérisée en ce que les ajours de la région dorsale présentent des régions de voile de faible épaisseur par rapport aux pleins et qui forment des ponts entre les pleins de la région dorsale.

En dehors de la région dorsale, les pleins de l'armature présentent éventuellement des branches comportant des bords rentrants.

L'invention concerne enfin un profilé comportant une armature telle que définie ci-dessus.

D'autres caractéristiques et avantages de l'invention apparaîtront mieux à la lecture de la description qui va suivre, donnée à titre d'exemple non limitatif en liaison avec les dessins dans lesquels :
- la Figure 1 représente un dispositif pour la mise en oeuvre du procédé selon l'invention ;
- la Figure 2a représente un mode de réalisation d'un galet pour la fabrication d'un profilé représenté à la figure 2b, à l'aide du procédé selon l'invention ; la figure 2c représentant une coupe AA de l'encadré de la figure 2a, avec adjonction d'une illustration "en surélévation" de l'armature ainsi obtenue.
- la Figure 3a représente en perspective une armature correspondant au Brevet Français n° 2 661 972 de la Demanderesse, et la figure 3b la même armature cintrée,
- les Figures 4a, 4b, 5a, 5b et 6 représentent d'autres armatures qui peuvent être réalisées à l'aide du procédé selon l'invention, et
- les Figures 7a et 7b représentent, en coupe, deux exemples de joints de portière de véhicule automobile, comprenant des armatures fabriquées à l'aide du procédé selon l'invention,
- et la Figure 8 représente une variante du dispositif de la figure 1.

La présente invention convient à la réalisation d'armatures cintrables, et en particulier d'armatures ayant en section une forme de U, de V, de S, de L ou bien encore de W. Des joints ayant une forme de U, mais dépourvus de régions de voile formant des ponts entre les pleins de la région dorsale, sont décrits notamment dans le Brevet FR 2 661 972 précité, dans les Brevets FR 2 438 536 (DRAFTEX) et FR 2 509 825 (MESNEL), et dans les Demandes de Brevets EP 0 252 659 et EP 0 277 425 toutes deux au nom de SILENT CHANNEL PRODUCTS.

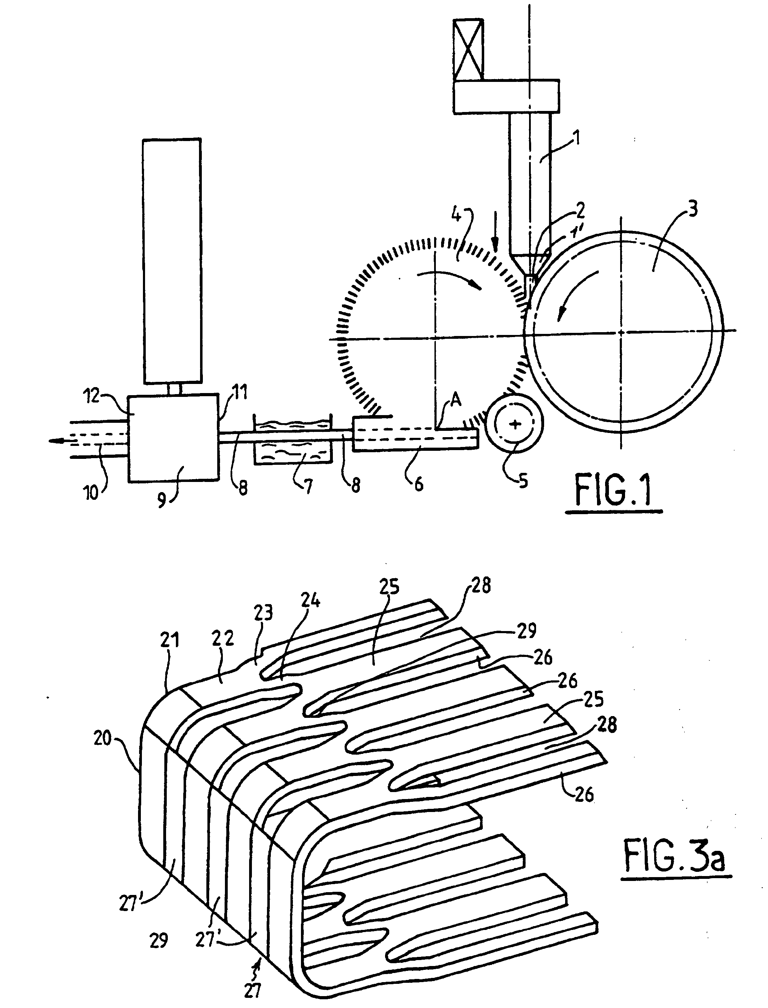

La Figure 1 représente une extrudeuse pour thermoplastique 1 qui présente successivement une tête d'extrusion 1' pour fournir un cordon ou une préforme 2 de matière en fusion dont la température, et donc la viscosité, sont choisies pour lui permettre d'être calandré entre un galet femelle 3 et un galet mâle 4. Le dispositif présente également un contre-galet de maintien 5 du cordon ou préforme 2 calandré, un conformateur 6 connu en soi pour le calibrage du cordon ou de la préforme 2 qui a été calandrée, un bac de refroidissement 7, et une extrudeuse de recouvrement présentant une tête d'extrusion 9 qui reçoit à son extrémité amont l'armature refroidie 8, et qui produit à son extrémité aval 12 un profilé 10 englobant l'armature.

L'extrudeuse 1 produit un cordon plat ou cylindrique ou bien une préforme ayant une section par exemple en forme de U, de V, de S, de L ou de W, et qui est en matière thermoplastique rigide.

On choisit de manière préférentielle des matières plastiques dont la nature de base permet une adhésion naturelle avec le recouvrement souple lors de la réalisation du profilé par exemple : PVC souple (recouvrement) sur PVC rigide (armature), PVC souple sur ABS, PP-EPDM ou EPDM sur PP, ou bien encore SEBS sur PP.

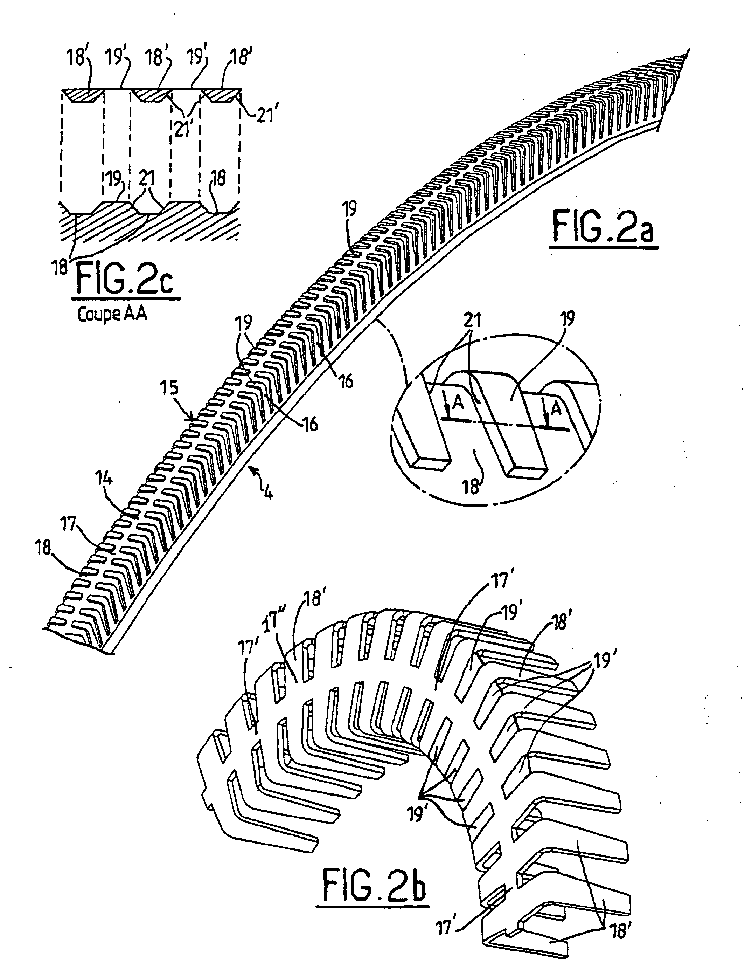

Le cordon en matière thermoplastique est déposé entre les deux galets (3 et 4) en co-rotation synchrone. Elle est ainsi calandrée pour obtenir l'armature par exemple en forme de U. Les galets sont de préférence de grand diamètre. Un grand diamètre permet en effet de bien calandrer et de mieux refroidir. Un galet "mâle" 4 est gravé en creux à la forme en négatif du dessin à obtenir, l'autre galet "femelle" 3 est lisse par exemple en U ou gravé et vient recouvrir parfaitement le galet 4 tangentiellement. La gravure du galet "mâle" 4 est un dessin spécifique. Il donne au profilé terminé des propriétés le rendant apte à répondre au cahier des charges du produit fini. Un exemple de galet "mâle" 4 constitué par une roue métallique présentant un pourtour 14 définissant un tore à section carrée ou rectangulaire et un motif en relief 15, réalisé par exemple en métal, est représenté à la Figure 2a. Cette roue permet de réaliser une armature en U cintrable représentée à la Figure 2b (après cintrage). Elle présente une arête centrale 17' et des bras coudés18' qui sont la contre-empreinte de l'arête 17 et des bras coudés 18 de la roue métallique de la figure 2a, situés entre les bras 16 du motif 15 qui présentent une extrémité coudée 19.

L'arête centrale 17' et la naissance 17" des bras 18' constituent la dorsale de l'armature.

Sur la périphérie des galets, le dessin est reproduit X fois. L'usinage de la gravure des galets de calandrage s'obtient par attaque chimique, électroérosion, moletage, ou fraisage. Comme représenté en encadré à la figure 2b et en coupe AA à la figure 2c. les pleins ou doigts 19 du galet 4 peuvent présenter des bords inclinés 21 formant des dépouilles, ce qui fait que les pleins ou doigts 18' de l'armature présentent des bords rentrants 21'. Le métal de construction est choisi parmi des aciers prétraités ou traités après l'usinage. Les galets peuvent être revêtus d'un anti-adhérent tel que le TiN, le TiCN ou le TiAlN, pour faciliter la séparation de l'armature.

La matière plastique encore en fusion et de très faible viscosité, est écrasée entre les deux galets 3 et 4. Elle flue et remplit parfaitement les gravures en creux, par contre elle est repoussée par les reliefs. La forme particulière des pleins et ajours des dessins réalisés donne ses propriétés à l'armature.

L'armature ressort sous l'apparence d'une chaîne interrompue des deux galets de calandrage 3 et 4. Elle est ensuite refroidie en la calibrant.

Après calandrage, il subsiste entre les bras 18' des régions de voile 19' de faible épaisseur (de l'ordre de quelques centièmes de mm à 0,1mm) qui correspondent à la matière qui flue naturellement au-dessus des extrémités 19 des bras 16 du motif 15.

Ces régions de voiles 19' n'ont été représentées que sur une partie de la longueur de l'armature.

Bien que ces regions de voile 19' pourraient être facilement éliminées, par exemple en soufflant de l'air comprimé chaud en sortie du calandrage, elles sont conservées selon l'invention. En effet, ces voiles 19' constituent des régions de pont de faible épaisseur entre les bras 18'. Lorsque le profilé est ultérieurement réalisé par extrusion (ou co- extrusion) d'un recouvrement par exemple en élastomère ou en thermoplastique souple, il se produit après extrusion un retrait de matière qui se traduit sur le produit fini par un défaut d'aspect plus ou moins prononcé, à savoir une succession de creux de faible amplitude, mais en général parfaitement visibles, qui sont localisés entre les régions amont 17" des bras 18', sur la dorsale du joint. La présence des voiles 19' tend à éviter ce phénomène de retrait, ce qui permet de diminuer voire d'éliminer ce phénomène qui présente la particularité d'intéresser la dorsale qui est la zone la plus visible du joint. Du fait de leur faible épaisseur, les régions de voile 19' ne compromettent pas la cintrabilité de l'armature. En outre, ces voiles 19' remplissent leur fonction en cours de fabrication avant que le joint ait été utilisé, ce qui fait qu'une éventuelle détérioration de ces régions 19' lors d'une opération de cintrage à faible rayon de courbure est sans influence sur le défaut d'aspect précité qui ne risque donc pas de réapparaître si les régions de voile 19' sont rompues.

Le dispositif de calandrage peut également être construit d'une façon différente, à savoir à l'aide d'une machine du type chenille de tirage dite "corrugateur" de tuyaux annelés.

Dans le cadre de l'invention, elle comporte un nombre N de paires de formes taillées selon la géométrie de l'armature à produire. Celles-ci peuvent être refroidies individuellement. L'usinage des N formes supérieures et des N formes intérieures s'effectue selon le même principe que la calandre à 2 galets en vis-à-vis "mâle-femelle". L'outillage est plus onéreux que dans le cas des galets, mais il produit plus vite l'armature, la longueur efficace de séjour du thermoplastique emprisonné entre les patins étant plus long. Cette variante permet également l'obtention de régions de voile.

L'opération suivante, réalisée au poste 9, est une extrusion en tête d'équerre pour recouvrir l'armature en U. Diverses matières peuvent être choisies pour remplir une fonction : par exemple cellulaire TP pour l'étanchéité, peau d'aspect ou de couleur, lèvre cosmétique, lèvres de tenue à l'intérieur du U.

Le profilé terminé est refroidi sans avoir besoin de post-formage.

Une variante préférée du procédé de recouvrement de l'armature est la coextrusion du cordon en deux matières thermoplastiques TP. Ce concept permet d'obtenir l'adhésion entre l'armature et sa matière de recouvrement lorsqu'il y a incompatibilité entre-elles. Dans ce cas, le cordon en matière rigide est recouvert d'une faible épaisseur d'une couche intermédiaire en une composition adhérant au recouvrement. Cette couche intermédiaire est choisie dans des matériaux extrudables compatibles avec l'armature et le recouvrement postérieur et aptes à adhérer à ceux-ci, EP greffé, adhésifs acryliques, ou éthylène-acétate de vinyle EVA par exemple. On peut de cette façon répondre aux divers cahiers des charges en laissant un large éventail dans le choix des matières thermoplastiques de compositions diverses. Un exemple avantageux est de coextruder une couche intermédiaire en éthylène-propylène EP greffé anhydride maléique sur une armature en polyamide PA pour la recouvrir d'une couche de revêtement souple en EPDM.

La matière coextrudée, dans un but de recyclabilité, a également la fonction d'être un compatibilisant avec les diverses matières thermoplastiques composant le profilé.

Dans le cas d'une adhésion entre un thermoplastique et un élastomère. on se reportera à l'enseignement de la demande de Brevet Européen EP 732 384 déposée par la Société Demanderesse.

Pour répondre à une fonction particulière, l'armature peut être réalisée avec une section qui varie sur la longueur développée d'un profilé. Des modifications de la position de la fibre neutre à divers endroits d'un joint de coffre d'automobile peut par exemple permettre une bonne prise de rayon successivement dans les 3 dimensions. Une épaisseur différente à des endroits précis peut permettre d'obtenir un pincement modulable du joint (par exemple en U). Des dimensions différentes des ajours peuvent permettre d'obtenir une prise de rayon particulière. Une asymétrie de l'axe est également envisageable. A cet effet, les galets de calandrage sont construits dans un diamètre d'un développé égal à la longueur du profilé à réaliser ou à un multiple ou à un sous-multiple de celle-ci. Par exemple, pour réaliser un joint d'entrée de porte dont le périmètre est de 3,5 mètres, les galets auront 1,11 mètres de diamètre. Un marquage en sortie de filière, par un jet d'encre par exemple, synchronisé avec la rotation de la calandre, repère les séquences de variation de section de l'armature. On peut ainsi couper la pièce à une longueur précise, en respectant les fonctions requises.

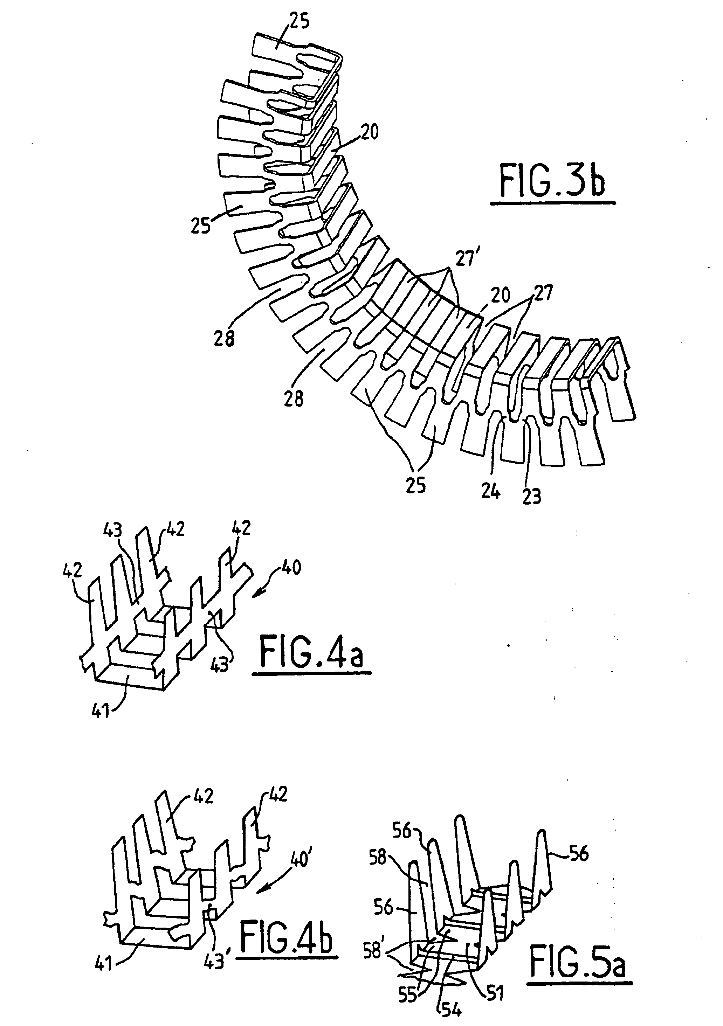

Le profilé représenté aux Figures 3a et 3b, qui est susceptible d'être fabriqué à l'aide du procédé selon l'invention, présente une section en forme de U, avec des barreaux pleins 20 séparés par des ajours 27 de contour fermé. Les barreaux pleins 20 se prolongent à leurs extrémités par des arrondis 21 à 90°, puis par des branches 22 qui se séparent en deux branches secondaires 23 et 24 qui se raccordent chacun à l'une de deux branches d'extrémité 25 adjacentes séparées par un ajour 26 de contour ouvert. Au niveau des branches secondaires 23 et 24, les ajours 27 et 28 se terminent par des extrémités en doigt de gant 29. Les ajours 27 présentent, dans la région dorsale du joint, des voiles 27', analogues aux voiles 19'. Comme précédemment, ils n'ont été représentés que sur une partie de la longueur du profilé.

Dans le cadre de la présente invention, les branches d'extrémité 25 ont des bords latéraux rentrants 26 inclinés par exemple de 45°, ce qui, comme déjà indiqué ci-dessus, facilite la réalisation et notamment le "démoulage" en sortie des galets et des patins.

L'armature 40 représentée à la Figure 4a est formée de U 42 reliés entre eux par des régions de pont 43 situées dans les branches 42 des U. L'armature 40' représentée à la Figure 4b est sensiblement identique à l'armature 40 à ceci près que les régions de ponts 43' sont inclinées.

L'armature 50 représentée aux Figures 5a et 5b présente des régions centrales 51 séparées entre elles par des fentes 54 et reliées à des branches 56 par des bras 55. Les branches 56 sont séparées entre elles par des fentes 58 qui se terminent par des prolongement triangulaires 58' séparant les bras 55. Chaque branche 56 est ainsi reliée par deux bras 55 à deux régions centrales 51 adjacentes.

Les joints des figures 4a, 5a et 5b présentent également des régions de voile (non représentées situées sur leur dorsale), et qui, comme précédemment, proviennent du calandrage.

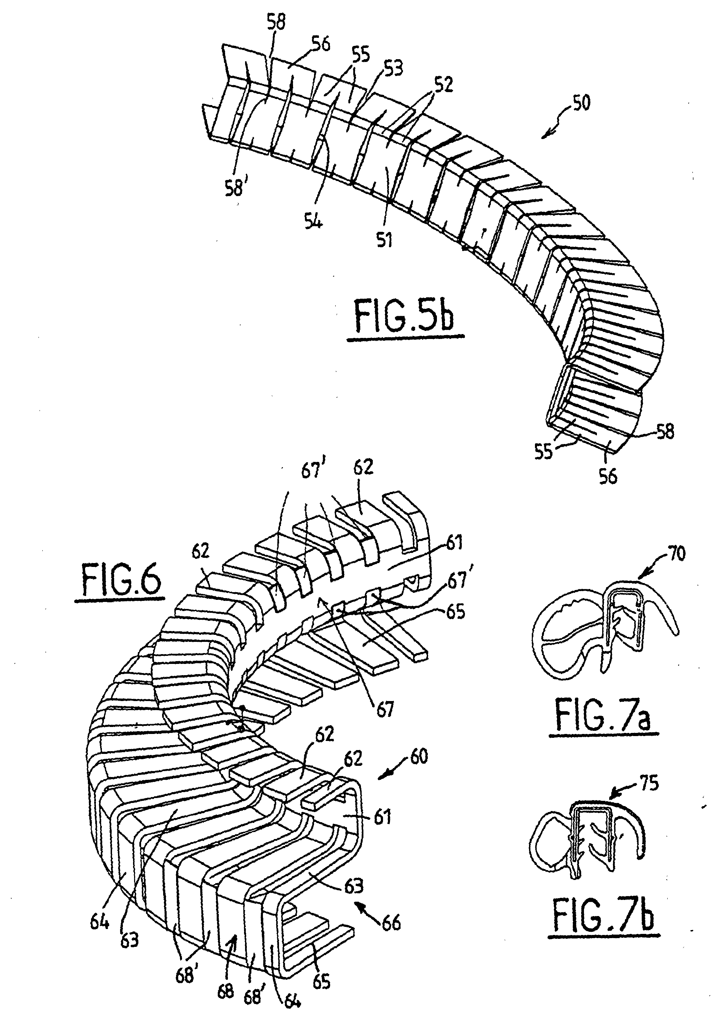

L'armature 60 représentée à la Figure 6 présente une arête longitudinale 61 bordée d'un côté par des doigts 62 et de l'autre par des doigts 66 formant des U (63,64,65). L'armature présente ainsi un profil en S, avec deux dorsales (67, 68) pourvues de voiles 67' et/ou 68'.

On voit ainsi que le procédé selon l'invention permet de réaliser les types d'armatures les plus divers.

Ces armatures peuvent être utilisées en particulier pour réaliser des joints de portière de véhicule automobile, par exemple 70 (Figure 7a) ou 75 (Figure 7b) pour lesquels leur cintrabilité est mise à profit.

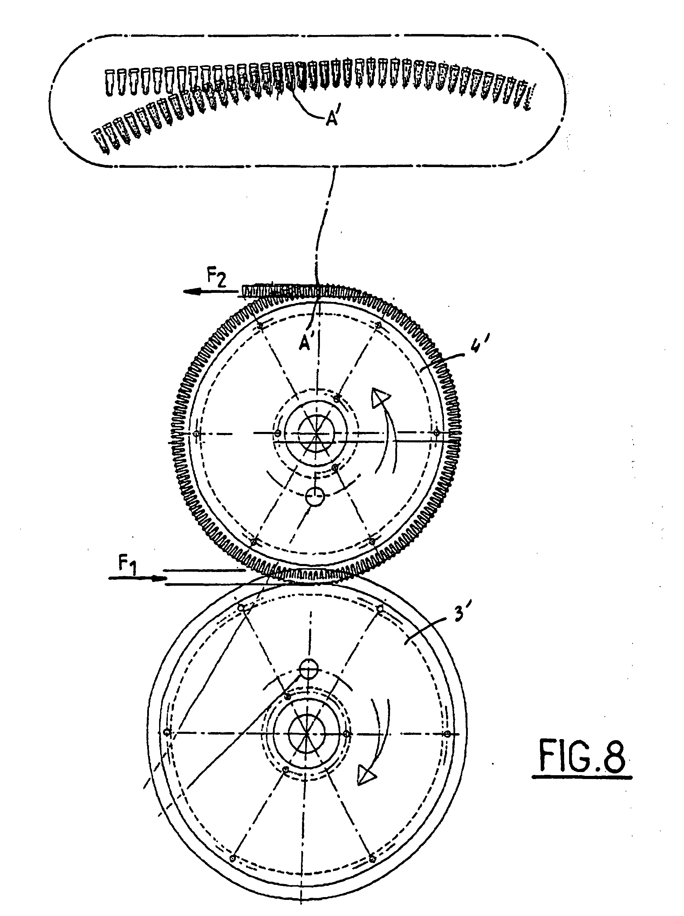

La figure 8 représente une variante du dispositif de la figure 1 dans laquelle le cordon (ou préforme) extrudé 2 est introduit horizontalement dans le sens de la flèche F₁ entre deux galets 3' et 4' et après calandrage ressort tangentiellement, au point A', dans le sens F₂ opposé à F₁, après un demi-tour sur le galet 4.

## Revendications

1. Procédé de fabrication d'une armature cintrable présentant un motif comportant au moins dans la région dorsale, des pleins et des ajours et destiné à la réalisation d'un profilé d'étanchéité armé, **caractérisé en ce qu'**il comporte :
a) l'extrusion d'un cordon ou d'une préforme en matière thermoplastique,
b) un calandrage du cordon ou de la préforme en matière thermoplastique pour lui conférer ledit motif, de manière à laisser subsister dans les ajours de la région dorsale des régions de voile (19', 27', 67', 68') de faible épaisseur par rapport aux pleins et qui forment des ponts entre les pleins de la région dorsale.

2. Procédé selon la revendication 1, **caractérisé en ce qu'**il comporte :
c) un refroidissement du cordon ou de la préforme calandrée.

3. Procédé selon la revendication 2, **caractérisé en ce que** ledit refroidissement s'accompagne d'une opération de calibrage.

4. Procédé selon une des revendications 1 à 3, **caractérisée en ce que** l'armature cintrable présente en section la forme d'un U, d'un V, d'un S, d'un L ou d'un W.

5. Procédé selon une des revendications 1 à 4, **caractérisé en ce que** le calandrage est réalisé entre au moins deux galets dont l'un au moins présente une empreinte en creux conformément au dit motif, et qui sont entraînés en rotation simultanée.

6. Procédé selon la revendication 5, **caractérisé en ce qu'**au moins une des galets est refroidi intérieurement.

7. Procédé selon une des revendications 1 à 4, **caractérisé en ce que** le calandrage est réalisé à l'aide d'une chenille de tirage présentant un nombre N de paires de formes présentant des empreintes conformément audit motif.

8. Procédé selon une des revendications 5 à 7, **caractérisé en ce que** les galets ou la chenille de tirage présentent une longueur développée égale ou multiple de la longueur d'un profilé à réaliser, ou bien à un multiple ou à un sous-multiple de celle-ci.

9. Procédé selon la revendication 8, **caractérisé en ce que** les empreintes des galets ou des formes présentent des variations en fonction de l'abscisse x, x variant entre 0 et L, pour faire varier la section et donc au moins une propriété de l'armature en fonction de ladite abscisse.

10. Procédé selon une des revendications précédentes, **caractérisé en ce que** l'armature présente des branches d'extrémité comportant des bords latéraux inclinés de manière à former des dépouilles.

11. Procédé selon une des revendications précédentes, **caractérisé en ce que**, pour la réalisation d'un profilé d'étanchéité armé, il comporte :
d) une extrusion d'une couche de recouvrement souple en élastomère ou en un matériau thermoplastique pour recouvrir l'armature.

12. Procédé selon la revendication 11, **caractérisé en ce que** le matériau de l'armature rigide et le matériau de la couche de recouvrement souple sont choisis parmi : (PVC rigide et PVC souple) ; (PP et PP-EPDM ou SEBS) ; (ABS et SEBS) ; (PVC-ABS et PVC souple) ; (PPMA et SEBS).

13. Procédé selon une des revendications 1 ou 12, **caractérisé en ce qu'**il met en oeuvre une co-extrusion d'une couche intermédiaire et de la couche de matériau de recouvrement, la couche intermédiaire étant en un matériau apte à adhérer au matériau de l'armature et au matériau de recouvrement souple entre lesquelles elle est interposée.

14. Procédé selon la revendication 13, **caractérisé en ce que** la couche intermédiaire est choisie parmi des copolymères Ethylène-Acétate de vinyle EVA ou bien des copolymères Ethylène-Ester acrylique EMA EBA.

15. Procédé selon la revendication 13, **caractérisé en ce que** l'armature est en polyamide PA, la couche intermédiaire est en EP greffé anhydride maléique, et **en ce que** la couche de recouvrement souple est en EPDM.

16. Armature cintrable en matière thermoplastique, telle qu'obtenue par le procédé selon l'une des revendications 1 à 15, présentant un motif comportant des pleins et des ajours au moins dans la région dorsale, **caractérisée en ce que** les ajours de la région dorsale présentent des régions de voile (19', 27', 67', 68') de faible épaisseur par rapport aux pleins et qui forment des ponts entre les pleins de la région dorsale.

17. Armature selon la revendication 16, **caractérisé en ce que** les pleins du motifs de l'armature présentent, en dehors de la région de dorsale, des branches comportant des bords rentrants.

18. Profilé **caractérisé en ce qu'**il comporte une armature cintrable selon la revendication 16 ou 17, ainsi qu'un recouvrement extrudé.

## Claims

1. A method of manufacturing curveable reinforcement presenting a pattern comprising solid portions and open portions at least in the dorsal region, and intended for use in making a reinforced sealing section member, the method being **characterized in that** it comprises:
a) extruding a bead or preform of thermoplastic material; and
b) calendering the bead or preform of thermoplastic material to impart said pattern thereto in such as manner as to leave, in the open portions of the dorsal region, web regions (19', 27', 67', 68') that are thin relative to the solid portions and that form bridges between the solid portions of the dorsal region.

2. A method according to claim 1, **characterized in that** it comprises:
c) cooling the calendered bead or preform.

3. A method according to claim 2, **characterized in that** said cooling is accompanied by a calibration operation.

4. A method according to any one of claims 1 to 3, **characterized in that** the curveable reinforcement presents a section that is U-shaped, V-shaped, S-shaped, L-shaped, or W-shaped.

5. A method according to any one of claims 1 to 4, **characterized in that** the calendering is performed between at least two wheels, at least one of which presents recessed imprints in the shape of said pattern, which wheels are driven to rotate simultaneously.

6. A method according to claim 5, **characterized in that** at least one of the wheels is cooled internally.

7. A method according to any one of claims 1 to 4, **characterized in that** the calendering is performed by means of a pulling caterpillar having N pairs of shapes presenting imprints in the shape of said pattern.

8. A method according to any one of claims 5 to 7, **characterized in that** the wheels or the pulling caterpillar present a developed length equal to the length L of the section member to be made, or to a multiple or to a submultiple thereof.

9. A method according to claim 8, **characterized in that** the imprints in the wheels or the shapes present variations as a function of an abscissa x where x varies over the range 0 to L, so as to cause the section and thus at least one property of the reinforcement to vary as a function of said abscissa.

10. A method according to any preceding claim, **characterized in that** the reinforcement has end branches with side edges that slope so as to form tapers.

11. A method according to any preceding claim, **characterized in that**, in order to make a reinforced sealing section member, it further comprises:
d) extruding a flexible covering layer of elastomer or of a thermoplastic material to cover the reinforcement.

12. A method according to claim 11, **characterized in that** the material of the rigid reinforcement and the material of the flexible covering layer are selected from: rigid PVC & flexible PVC; PP & PP-EPDM or SEBS; ABS & SEBS; PVC-ABS & flexible PVC; and PMMA & SEBS.

13. A method according to claim 11 or 12, **characterized in that** it implements coextrusion of an intermediate layer and of the layer of covering material, the intermediate layer being of a material that is suitable for adhering both to the material of the reinforcement and to the flexible covering material between which it is interposed.

14. A method according to claim 13, **characterized in that** the intermediate layer is selected from ethylene vinyl acetate copolymers or ethylene-acrylic ester copolymers.

15. A method according to claim 13, **characterized in that** the reinforcement is made of polyamide, the intermediate layer of maleic anhydride grafted epoxy, and **in that** the flexible covering layer is made of EPDM.

16. Curveable reinforcement of thermoplastic material as obtained by the method according to claims 1 to 15, said reinforcement having a pattern with solid portions and open portions in the dorsal region, the reinforcement being **characterized in that** the open portions of the dorsal region present web regions (19', 27', 67', 68') that are thin relative to the solid portions and that form bridges between the solid portions of the dorsal region.

17. Reinforcement according to claim 16, **characterized in that** the solid portions of the pattern of the reinforcement present branches outside said dorsal region and including reentrant edges.

18. A section member **characterized in that** it comprises curveable reinforcement according to claim 16 or 17 together with an extruded covering.

## Patentansprüche

1. Verfahren zur Herstellung einer biegsamen Armierung, die ein Muster aufweist, welches zumindest in dem Rückenbereich Vollbereiche und Durchbrüche umfasst und zur Realisierung eines armierten Dichtungsprofils bestimmt ist, **dadurch gekennzeichnet, dass** es umfasst:
a) Extrusion einer Schnur oder einer Vorform aus thermoplastischem Material,
b) Kalandrieren der Schnur oder der Vorform aus thermoplastischem Material, um dieser das Muster in einer Weise aufzudrücken, dass in den Durchbrüchen des Rückenbereichs Schleierbereiche (19', 27', 67', 68') von geringer Dicke im Vergleich zu den Vollbereichen stehen gelassen werden, welche zwischen den Vollbereichen des Rückenbereichs Brücken bilden.

2. Verfahren gemäß Anspruch 1, **dadurch gekennzeichnet, dass** es umfasst:
c) Abkühlen der kalandrierten Schnur oder Vorform.

3. Verfahren gemäß Anspruch 2, **dadurch gekennzeichnet, dass** das Abkühlen mit einem Kalibrieren einhergeht.

4. Verfahren gemäß einem der Ansprüche 1 bis 3, **dadurch gekennzeichnet, dass** die biegsame Armierung im Querschnitt die Form von einem U, einem V,einem S, einem L oder einem W aufweist.

5. Verfahren gemäß einem der Ansprüche 1 bis 4, **dadurch gekennzeichnet, dass** das Kalandrieren zwischen mindestens zwei Walzen bewerkstelligt wird, von denen die eine zumindest einen Abdruck mit Vertiefungen gemäß dem Muster aufweist, und welche in eine simultane Rotation versetzt sind.

6. Verfahren gemäß Anspruch 5, **dadurch gekennzeichnet, dass** zumindest eine der Walzen von innen gekühlt ist.

7. Verfahren gemäß einem der Ansprüche 1 bis 4, **dadurch gekennzeichnet, dass** das Kalandrieren mit Hilfe eines Raupenabzugs, welcher eine Anzahl N von Paaren von Formen aufweist, welche Abdrücke gemäß dem Muster aufweisen, bewerkstelligt wird.

8. Verfahren gemäß einem der Ansprüche 5 bis 7, **dadurch gekennzeichnet, dass** die Walzen oder der Raupenabzug eine Länge aufweisen, welche gleich oder vielfach der Länge eines zu realisierenden Profils, oder aber als ein Vielfaches oder ein Teiler derselben ausgebildet ist.

9. Verfahren gemäß Anspruch 8, **dadurch gekennzeichnet, dass** die Abdrücke von Walzen oder Formen Variationen als Funktion der x-Achse aufweisen, wobei x zwischen 0 und L variiert, um ein Variieren des Querschnitts und damit zumindest einer Eigenschaft der Armierung als Funktion der Achse zu bewerkstelligen.

10. Verfahren gemäß einem der vorhergehenden Ansprüche, **dadurch gekennzeichnet, dass** die Armierung Endzweige aufweist, welche schräge seitliche Ränder aufweisen, um Endrücknahmen zu bilden.

11. Verfahren gemäß einem der vorhergehenden Ansprüche, **dadurch gekennzeichnet, dass** es für die Realisierung eines Dichtungsprofils umfasst:
d) Extrusion einer weichen Bedeckungsschicht aus einem Elastomer oder einem thermoplastischen Material zur Bedeckung der Armierung.

12. Verfahren gemäß Anspruch 11, **dadurch gekennzeichnet, dass** das Material der steifen Armierung und das Material der weichen Bedeckungsschicht ausgewählt wird aus: (Hart-PVC und Weich-PVC); (PP und PP-EPDM oder SEBS): (ABS und SEBS); (PVC-ABS und Weich-PVC); (PPMA und SEBS).

13. Verfahren gemäß einem der Ansprüche 11 oder 12, **dadurch gekennzeichnet, dass** es eine Koextrusion einer Zwischenschicht und der Schicht des Bedeckungsmaterials durchführt, wobei die Zwischenschicht aus einem Material ist, welches zum Haften an dem Material der Armierung und an dem weichen Bedeckungsmaterial, zwischen welchen es angeordnet ist, geeignet ist.

14. Verfahren gemäß Anspruch 13, **dadurch gekennzeichnet, dass** die Zwischenschicht unter Ethylen-Vinylacetat-Copolymeren EVA oder aber Ethylen-Acrylsäureester-Copolymeren EMA EBA ausgewählt wird.

15. Verfahren gemäß Anspruch 13, **dadurch gekennzeichnet, dass** die Armierung aus Polyamid PA ist, die Zwischenschicht aus EP mit aufgepfropftem Maleinsäureanhydrid ist, und dass die weiche Bedeckungsschicht aus EPDM ist.

16. Biegsame Armierung aus thermoplastischem Material, welche durch das Verfahren gemäß einem der Ansprüche 1 bis 15 hergestellt ist, und die ein Muster aufweist, welches zumindest in dem Rückenbereich Vollbereiche und Durchbrüche umfasst, **dadurch gekennzeichnet, dass** die Durchbrüche des Rückenbereichs Schleierbereiche (19', 27', 67', 68') geringer Dicke im Vergleich zu den Vollbereichen aufweisen, welche Brücken zwischen den Vollbereichen des Rückenbereichs bilden.

17. Armierung gemäß Anspruch 16, **dadurch gekennzeichnet, dass** die Vollbereiche der Muster der Armierung außerhalb des Rückenbereichs Zweige aufweisen, welche in sich zurückkehrende Ränder umfassen.

18. Profil, **dadurch gekennzeichnet, dass** es eine biegsame Armatur gemäß Anspruch 16 oder 17, sowie eine extrudierte Bedeckung aufweist.
